Europäisches Patentamt

**European Patent Office**

**Office européen des brevets**

(11) Numéro de publication: **0172787**
**B1**

(12)                          **FASCICULE DE BREVET EUROPEEN**

(45) Date de publication du fascicule du brevet:
**11.05.88**

(51) Int. Cl.⁴: **A 23 C 19/093**, A 23 C 19/08

(21) Numéro de dépôt: **85810324.5**

(22) Date de dépôt: **15.07.85**

(54) **Procédé pour la fabrication de fromage en mousse.**

(30) Priorité: **17.07.84 CH 3465/84**

(43) Date de publication de la demande:
**26.02.86 Bulletin 86/9**

(45) Mention de la délivrance du brevet:
**11.05.88 Bulletin 88/19**

(84) Etats contractants désignés:
**AT BE CH DE FR GB IT LI LU NL SE**

(56) Documents cités:
**FR - A - 1 313 795
FR - A - 2 165 202
US - A - 1 928 664
US - A - 3 962 483**

(73) Titulaire: **BATTELLE MEMORIAL INSTITUTE, 7 route de Drize, CH-1227 Carouge/Genève (CH)**

(72) Inventeur: **Giddey, Claude, 59 route de Chêne, Ch-1208 Geneve (CH)**
Inventeur: **Dove, Georges, Quai du Cheval Blanc 1, CH-1227 Carouge (CH)**

(74) Mandataire: **Dousse, Blasco et al, 7, route de Drize, CH-1227 Carouge/Genève (CH)**

## Description

La présente invention a pour objet la préparation d'un produit alimentaire aéré à base de fromage ou, plus spécifiquement, à base de produits lactés ayant subi un traitement de maturation similaire à celui que subissent les fromages.

Le produit préparé suivant l'invention présente une structure de mousse ferme et stable constituée par la présence de microbulles d'air (ou d'un gaz) dispersées dans la pâte de fromage et, pour cette raison, on le dénommera dans ce qui suit par «mousse de fromage» ou «fromage en mousse».

En soi, la notion de mousse de fromage n'est pas nouvelle. En effet, le brevet français No. 2 165 202 divulgue une mousse de fronage obtenue en ajoutant à du fromage fondu à 95-110°C sous atmosphère inerte un ou plusieurs des ingrédients suivants: lait en poudre, crème, beurre, caséine, petit-lait, et en battant le mélange sous une pression de 0,5 à 1,5 bar de gaz de façon à obtenir une mousse dont le coefficient de foisonnement est de 1,2.

Le document Dissertation Abstracts International; Section B; the Sciences & Engineering 32 (6), 3424 (1971) mentionne le fromage battu en mousse et le fait que le retrait de cette mousse au stockage diminue lorsque l'émulsion est réalisée en présence de $N_2O$ et qu'elle contient des émulsificateurs et stabilisateurs tels que la gomme acacia et les glucosyl glucanes.

Le brevet français No. 2 133 293 divulgue un produit lacté expansé obtenu par battage à froid du lait contenant de la présure de manière à obtenir une mousse de densité 0,25 à 0,55. Le lait peut être du lait concentré et il peut être innoculé par un microorganisme de type pénicillium de façon à obtenir un fromage.

Les mousses de fromage connues dans l'état de la technique n'ont cependant ni une texture de grande fermeté ni une stabilité au stockage de longue durée et il était désirable de remédier à ces inconvénients en fournissant une mousse de fromage plus ferme, stable au stockage et de longue conservation.

La mousse de fromage obtenue suivant l'invention, quoique onctueuse et s'étalant facilement, présente une grande stabilité au stockage (plus de six mois à température ambiante dans un récipient fermé mais que l'on a ouvert de temps à autre pour prélever des échantillons) au point de vue volume, densité de la mousse et conservation. Cette mousse contient essentiellement 30 à 50% de solides de fromage, 1 à 4% de sel et/ou autres sels fondants, une certaine proportion d'eau et, incorporée de façon parfaitement homogène, une émulsion d'air ou de gaz dans une solution d'albumine, une telle émulsion étant notamment constituée de blanc d'oeuf battu en neige. Sa densité est de l'ordre de 0,65 à 0,80 g/cm³. La proportion d'émulsion gaz/albumine par rapport au fromage est d'environ 0,5 à 2 v/v ce qui correspond, si l'on utilise, au départ, une solution d'albumine dans l'eau de 10 à 20% en poids, à l'incorporation dans le fromage de 1 à 25% en poids de cette solution, celle-ci augmentant 10 à 20 fois de volume par battage. En gros, la quantité en poids d'albumine incorporée, en tant qu'émulsion dans le fromage, ne dépasse pas environ 0,2 à 5% ce qui, au point de vue alimentaire et gustatif, devrait à première vue conduire à des effets négligéables.

Or, et c'est là que réside l'intérêt et l'inattendu de l'invention, la mousse de fromage obtenu suivant celle-ci possède un goût et une texture extrêmement attrayants par rapport au fromage de départ ayant servi à la fabriquer. Elle est onctueuse, légère, de goût très fin et se laisse parfaitement tartiner et, ceci, sans que l'on y ait ajouté aucun corps gras additionnel. Par ailleurs, elle n'a, au point de vue organoleptique, que peu de rapport avec les fromages fondus habituels dont l'arôme est généralement commun et peu développé tandis que, dans le produit de l'invention, l'arôme naturel du fromage lui ayant donné naissance et préservé et même exalté. Par ailleurs, la texture de la mousse de fromage est nettement plus agréable par son onctuosité que celle des fromages fondus habituels.

Le procédé pour réaliser la présente mousse de fromage est le suivant:

a) on prépare entre 40 et 80°C une solution aqueuse «a» de pâte de fromage dont la viscosité, dans cette gamme de température, est de 0,5 à 50 Pa.s (500 à 50000 cP);

b) on émulsionne à température ambiante, par battage, de l'air ou un gaz non toxique dans une solution aqueuse d'albumine à 10-20% en poids de manière à réaliser une émulsion gaz/liquide «b» de l'ordre de 10/1 à 20/1 v/v;

c) entre 40 et 80°C, on incorpore, à 1 volume de «a», 0,5 à 2 volumes de «b» en mettant en contact les composants et en leur imprimant des mouvements laminaires non turbulents tels qu'ils s'unissent peu à peu en un mélange homogène dont la structure se stabilise par coagulation de l'albumine.

Il est particulièrement important, lors de l'incorporation du blanc battu b à la solution de fromage a, en raison de la grande différence de densité entre les composants a et b, d'éviter tout effort mécanique exagéré pouvant affecter la structure aérée de la mousse recherchée et, notamment, tout mouvement de brassage violent pouvant conduire à la rupture de l'émulsion gaz/liquide que constitue la dispersion de bulles de gaz ou d'air dans la solution d'albumine. Pour ce faire, on peut, lorsqu'il s'agit d'une petite quantité de mousse (essais de laboratoire), travailler à la main au moyen d'instruments traditionnels, cuillère de bois ou de métal, mélangeur à broche, etc.... On notera à ce propos le document US-A-3 962 483 qui divulgue l'incorporation à chaud au fromage fondu de protéines telles la caséine et l'albumine, le but d'une telle incorporation étant de rendre le fromage résistant à la fusion, or, on a pu constater qu'une telle incorporation suivie du battage du produit résultant pour faire une mousse, tel qu'il résulte de l'enseignement du document FR-A-2 165 202, ne conduit nullement à la mousse de fromage de l'invention. En effet, dans de telles conditions de mélange préalable avec le fromage fondu, l'albumine ne forme plus, par elle-même, de mousse, cette propriété étant inhibée par la présence des matières grasses du fromage; le battage ne conduit alors qu'à un état allégé transitoire instable provoqué par l'incorporation d'air dans la masse, cet air s'échappant en peu de temps.

En ce qui concerne la mise en œuvre industrielle du procédé de l'invention, on aura de préférence recours au procédé suivant:

on effectue l'incorporation de la solution ou suspension de fromage «a» dans l'émulsion à base d'albumine «b» ou vice-versa de la manière suivante:

on forme un premier écoulement a de ladite solution et un second écoulement b de ladite émulsion;

on fait se déplacer côte-à-côte dans le même sens et se réunir laminairement ces écoulements de manière à réaliser un écoulement unique ab à deux composantes jointives a et b juxtaposées;

on divise axialement cet écoulement, approximativement transversalement à la zone de jonction des deux composantes, en deux nouveaux écoulements indépendants $(ab)_1$ et $(ab)_2$, chacun de ceux-ci comportant une portion de composante a et une portion de composante b;

puis, par le biais de chicanes hélicoïdales interposées sur le trajet des écoulements, on en modifie la forme et l'orientation l'un par rapport à l'autre et, comme auparavant, on les réunit à nouveau laminairement en un écoulement unique, les modifications imposées par les chicanes conduisant essentiellement à la mise en contact de la composante a de $(ab)_1$ avec la composante b de $(ab_2)$, et inversement, de manière à réaliser un écoulement approximativement tetraphasique abab = $(ab)2$.

Pour mettre en œuvre ce procédé de «mélange statique», on pourra utiliser un dispositif tubulaire dans lequel on fait circuler les composantes à mélanger, ce dispositif comprenant, en succession, des éléments diviseurs, des éléments déflecteurs, les uns gauches et les autres droits, et des éléments linéairement mélangeurs. Un exemple de tel appareil figure dans la référence Food Engineering 42 (11), 119-20 (1970).

Les types de fromages utilisables dans la présente invention sont extrêmement nombreux et comprennent pratiquement tous les fromages susceptibles de former des suspensions aqueuses de fromage à chaud avec ou sans addition d'eau supplémentaire. Ainsi conviennent les fromages à pâte molle tels que camembert, brie, etc., les fromages bleus tels que roquefort, gorgonzola, bresse, etc. et les fromages plus durs tels que tilsit, gruyère, comté, appenzeller, etc. Avec les fromages à pâtes très peptisées comme le roquefort, la suspension a peut être obtenue sans apport supplémentaire d'eau, la suspension aqueuse à consistance voulue pouvant être obtenue par simple chauffage de la pâte avec agitation mécanique. Pour d'autres fromages, plus secs, des apports, de l'ordre de 5 à 50% en poids, peuvent être nécessaires, la quantité exacte dépendant du type de fromage, de son degré de siccité et du type de mousse à obtenir. Les quantités d'eau éventuellement à rajouter sont à déterminer de cas en cas suivant les besoins. De manière générale, on prépare la solution en fragmentant le fromage (en morceaux ou en chapelure), en le mélangeant à l'eau et en chauffant le mélange jusqu'à dissolution. Pour faciliter la fusion, on peut utiliser des sels de fonte, par exemple phosphates, polyphosphates, acétates, lactates, etc.

Il est important d'utiliser des fromages suffisamment «faits» pour que l'action enzymatique des microorganismes innoculés ait conduit à un degré de peptisation des protéines suffisant pour leur conférer une hydrosolubilité suffisante et permettre l'obtention d'une solution aqueuse homogène. Ainsi, pour les besoins industriels, il peut être avantageux de ne pas utiliser des fromages déjà mûrs du commerce (en effet, dans les procédés industriels, la nécessité d'avoir une quantité relativement élevée de matière première rigoureusement identique est importante) mais de procéder à partir de caillé de lait (préparé par les procédés habituels) pris en bloc, par exemple de plusieurs dizaines ou centaines de kilos. Dans un tel cas, on inocule cette charge de lait caillé, avant ou après sa précipitation, avec un ou plusieurs microorganismes typiques, choisis selon les besoins et le type de fromage que l'on veut convertir en mousse (inclus la présure), et on procède à la maturation en masse de la charge dans des conditions bien contrôlées, à l'abri de l'air et en la remuant périodiquement. Une fois le degré de maturation désiré achevé, on pourra utiliser cette masse en partie ou en entier dans le procédé suivant l'invention.

Pour réaliser l'émulsion de gaz dans la solution d'albumine (blanc d'oeuf), on peut utiliser des blancs d'oeuf frais ou en poudre; en général, on préfère le blanc sous forme de poudre sèche pour des raisons de simplicité et de reproductibilité (pesées plus précises). Le battage de la solution en neige peut se faire par tous les moyens connus habituels, y compris en continu ou discontinu. A la place d'air on peut utiliser un gaz non toxique quelconque, par exemple un gaz rare, $N_2$, $N_2O$, etc.

La température à laquelle on effectue l'incorporation de l'émulsion b à la solution de fromage a revêt l'importance suivante: elle doit être suffisamment élevée pour, d'une part, assurer la fluidité nécessaire à la solution de fromage et, d'autre part, permettre à l'albumine de se solidifier (la solidification est aussi, en partie, provoquée par l'acidité du fromage: pH 5-6) et aussi de conférer sa structure remarquablement ferme, quoique souple, à la mousse de l'invention. Si la température est trop élevée, c'est-à-dire si elle dépasse sensiblement 70-80°C, la «prise» pourrait être trop rapide et donner lieu à un manque d'homogénéité du produit. De même, une température trop basse, c'est-à-dire nettement inférieure à 40°C pourrait exagérément retarder la «prise» et il pourrait en résulter un affaissement plus ou moins prononcé de la mousse.

Il est bien entendu que, outre les composants habituels des fromages déjà implicitement évoqués plus haut, c'est-à-dire, outre les protéines lactées, les matières grasses, et l'eau, les microorganismes, le sel et autres adjuvants naturels des fromages, on peut également prévoir des additifs alimentaires supplémentaires tels qu'épices, condiments divers, extraits de plantes et même d'autres aliments sous forme divisée tels que jambon, viande, légumes etc.

On peut également prévoir d'incorporer des stabilisateurs tels que gélatine, agar, carrageenane et autres polysaccharides stabilisateurs.

Les Exemples suivants illustrent l'invention.

*Exemple 1*

On a chauffé sous agitation, d'abord à 115°C pendant environ 15 min, puis à 60°C les ingrédients suivants de manière à réaliser une suspension a:

355 g de bleu d'Auvergne à 55% de matières grasses, 50 g d'eau et 7 g de PZO (sel de fonte de la firme Benckiser Knapsack, Allemagne). Par ailleurs, on a réalisé une émulsion b en battant vigoureusement à température ambiante à l'air une solution de 1,67 g d'albumine en poudre dans 8,33 g d'eau.

On a ensuite incorporé lentement à la spatule l'émulsion b à la suspension a maintenue à 60°. On a évité tout mouvement violent pouvant conduire à la rupture de l'émulsion. Le mélange était homogène après environ 3-5 min de travail et a fourni une mousse de densité 0,75 de composition pondérale suivante: fromage 83,75%, eau 14,15%, albumine 0,4% et sels de fonte 1,7%.

Cette mousse présente un goût très fin quoiqu'intense et rappelle celui d'un mélange de bleu d'Auvergne et de beurre. Sa consistance est ferme et douce à la fois et elle s'étale en couches très minces et homogènes. Sa conservation en pots est excellente et dépasse six mois à température ordinaire sans précaution particulière.

*Exemple 2*

On a procédé comme à l'Exemple précédent à partir de 204 g de gorgonzola pasteurisé à 90°, 30 g d'eau, 2 g de PZO et 0,6 g de gélatine comme stabilisateur. Par ailleurs, on a également préparé une émulsion de 1,34 g d'albumine dans 6,66 g d'eau et on a incorporé cette émulsion à 60°C dans la solution de gorgonzola, ce qui a fourni une mousse ferme, souple et de goût excellent.

*Exemple 3*

On a procédé comme dans les Exemples précédents à partir, d'une part, de 3,1 kg de tilsit, 1 l d'eau, 100 g de PZO et 6 g de gélatine et, d'autre part, 16 g d'albumine dans 83,3 ml d'eau battu en émulsion.

On a mélangé ces composants en les faisant parvenir, sous forme d'écoulements propulsés par des pompes, dans un tube mélangeur statique chauffé à 60°C comportant une succession de chicanes déflectrices et d'éléments mélangeurs disposés de manière à, alternativement, réunir de façon laminaire les écoulements, les diviser, les soumettre à un mouvement hélicoïdal et les réunir à nouveau. Le nombre de ces éléments mélangeurs était égal ou dépassait 12. On a ainsi obtenu, à la sortie du tube, une masse homogénéisée de mousse de tilsit à la fois souple et ferme et de goût excellent. Cette mousse s'est gardée en parfaite condition pendant plus de six mois à température ordinaire.

*Exemple 4*

On a chauffé à 90° tout en malaxant jusqu'à obtention d'une masse fluide et homogène les fromages A à D suivants avec les ingrédients réunis (en poids) dans le tableau ci-après:
A: emmenthal; B: camembert; C: fontine; D: roquefort.

Par ailleurs, on a préparé des solutions d'albumine dans l'eau (également suivant les indications figurant au tableau ci-après) et on a transformé ces solutions en neige (densité de l'ordre de 0,03 à 0,1) par battage vigoureux en présence d'air.

On a alors incorporé les mousses d'albumine respectivement aux crèmes A à D vers 50-60° en utilisant la technique de mélange de l'exemple 1.

TABLEAU

| Ingrédients (p.e.p.) | A | B | C | D |
|---|---|---|---|---|
| Fromage | 500 | 500 | 600 | 477 |
| Beurre anhydre | 125 | 20 | — | — |
| Eau | 400 | — | — | — |
| PZO (sel fondant) | 20 | 3 | 12 | — |
| AFILACTS marque commerciale (agent conservateur) | — | 0,01 | 0,01 | — |
| Sorbate de K | 1,6 | — | — | 1,7 |
| Fondagil M-9 (marque commerciale) (fondant) | | | | 7,1 |
| Gélatine | — | — | — | 1,55 |
| Crème fraîche à 25% | — | — | 400 | — |
| Albumine à 16% | 35 | 30 | 36 | 14,3 |
| Densité mousse de fromage | 0,75 | 0,8 | 0,75 | 0,7 |

On a ainsi obtenu des mousses de fromage très appétissantes et de goût très fin d'excellente stabilité au stockage.

**Revendications**

1. Procédé pour la fabrication de fromage en mousse à partir de fromage pasteurisé ou stérilisé, celle-ci étant de texture ferme, aérée et de longue conservation, constituée par la présence dans la pâte de fromage de microbulles d'air ou de gaz dispersées de façon homogène, caractérisé par le fait que:

a) on prépare entre 40 et 80°C une solution aqueuse «a» de pâte de fromage dont la viscosité, dans cette gamme de température, est de 0,5 à 50 Pa.s (500 à 50000 cP);

b) on émulsionne à température ambiante, par battage, de l'air ou un gaz non toxique dans une solution aqueuse d'albumine à 10-20% en poids de manière à réaliser une émulsion gaz/liquide «b» de l'ordre de 10/1 à 20/1 v/v;

c) entre 40 et 80°C, on incorpore, à 1 volume de «a», 0,5 à 2 volumes de «b» en mettant en contact les composants et en leur imprimant des mouvements laminaires non turbulents tels qu'ils s'unissent peu à peu en un mélange homogène dont la structure se stabilise par coagulation de l'albumine.

2. Procédé suivant la revendication 1, caractérisé par le fait qu'on obtient la solution ou suspension «a» en chauffant du fromage jusqu'à liquéfaction, l'eau de la solution étant celle contenu dans le fromage de départ.

3. Procédé suivant la revendication 1, caractérisé par le fait que, pour réaliser la solution «a», on disperse le fromage sous forme divisée dans 5 à 50% son poids d'eau et qu'on chauffe jusqu'à complète dissolution ou mise en suspension homogène.

4. Procédé suivant la revendication 1, caractérisé par le fait que, pour réaliser la suspension ou solution «a», on utilise un caillé de lait dont on a, au moins en partie, séparé le sérum et qu'on a préalablement ensemencé d'au moins une souche de microorganismes et de présure propre à transformér ce caillé en fromage; on fait mûrir cette masse à l'abri de l'air et en la brassant périodiquement puis, lorsque la maturation en fromage est achevée, on la chauffe, avec ou sans addition supplémentaire d'eau, jusqu'à liquéfaction complète.

5. Procédé suivant la revendication 1, caractérisé par le fait qu'on effectue l'incorporation de la solution ou suspension de fromage «a» dans l'émulsion à base d'albumine «b» ou vice-versa de la manière suivante:

on forme un premier écoulement a de ladite solution et un second écoulement b de ladite émulsion;

on fait se déplacer côte-à-côte dans le même sens et se réunir laminairement ces écoulements de manière à réaliser un écoulement unique ab à deux composantes jointives a et b juxtaposées;

on divise axialement cet écoulement, approximativement transversalement à la zone de jonction des deux composants, en deux nouveaux écoulements indépendants (ab)$_1$ et (ab)$_2$, chacun de ceux-ci comportant une portion de composante a et une portion de composante b;

puis, par le biais de chicanes hélicoïdales interposées sur le trajet des écoulements, on en modifie la forme et l'orientation l'un par rapport à l'autre et, comme auparavant, on les réunit à nouveau laminairement en un écoulement unique, les modifications imposées par les chicanes conduisant essentiellement à la mise en contact de la composante a de (ab)$_1$ avec la composante b de (ab)$_2$, et inversement, de manière a réaliser un écoulement assproximativement tétraphasique abab = (ab)2;

on répète ces opérations de recoupement, réorientation et juxtaposition des écoulements jusqu'à obtention d'un écoulement composite macroscopiquement homogène abab...ab = (ab)n, n'étant pas inférieur à 12.

6. Mousse de fromage comprenant en poids 30 à 50% de solides de fromage, 1 à 4% de sel ordinaire et/ou autres sels fondants, 0,2 à 5% d'albumine d'oeuf, le restant étant constitué par de l'eau et d'éventuels condiments ou autres produits alimentaires divisés, caractérisée par le fait que sa densité est de 0,65 à 0,80, qu'elle est constituée d'une dispersion homogène de microbulles d'air ou de gaz dans la pâte de fromage et que son goût est pratiquement identique à celui du fromage uitlisé pour sa fabrication en plus doux et plus fin.

## Patentansprüche

1. Verfahren zum Herstellen von Käse in Schaumform aus pasteurisiertem oder sterilisiertem Käse, wobei dieser feste Struktur aufweist, luftig und von langer Haltbarkeit ist, und durch das Vorhandensein von Mikrobläschen aus Luft oder Gas, die in homogener Form in der Käsepaste dispergiert sind, gebildet ist, dadurch gekennzeichnet, dass man

a) bei 40-80°C eine wässrige Lösung «a» aus Käsepaste herstellt, deren Viskosität in diesem Temperaturbereich zwischen 0,5 und 50 Pa.s (500-50 000 cP) beträgt,

b) bei Umgebungstemperatur durch Schlagen, Luft oder nichttoxisches Gas in eine wässrige Lösung von Albumin von 10-20 Gew.-% emulgiert, um eine Emulsion Gas/Flüssigkeit «b» im Bereich von 10/1 bis 20/1 v/v zu erhalten,

c) bei 40-80°C in ein Volumen «a» 0,5-2 Volumen «b» einbringt, indem man die Komponenten in Kontakt bringt und man sie laminaren, nicht turbulenten Bewegungen unterwirft, so dass sie sich nach und nach zu einer homogenen Mischung, deren Struktur sich durch Koagulation des Albumins stabilisiert, vereinigen.

2. Verfahren nach Anspruch 1, dadurch gekennzeichnet, dass man die Lösung oder Suspension «a» erhält, indem man Käse bis zur Verflüssigung erhitzt, wobei das Wasser der Lösung das im ursprünglichen Käse enthaltene ist.

3. Verfahren nach Anspruch 1, dadurch gekennzeichnet, dass man, um die Lösung «a» zu erhalten, den Käse in zerteilter Form in 5 bis 50 Gew.-% Wasser dispergiert und dass man bis zur vollständigen Auflösung oder homogenen Suspension erhitzt.

4. Verfahren nach Anspruch 1, dadurch gekennzeichnet, dass man, um die Suspension oder Lösung «a» zu erhalten, geronnene Milch verwendet, von der man, zumindest teilweise, das Serum abgetrennt hat, und der man vorher zumindest einen Stamm Mikroorganismen und Labferment eingeimpft hat, die geeignet sind, diese geronnene Milch in Käse umzuwandeln, dass man diese Masse luftgeschützt reifen lässt, wobei man sie in periodischen Abständen umrührt und sie dann, wenn der Reifeprozess im Käse beendet ist, mit oder ohne zusätzliche Zugabe von Wasser bis zur vollständigen Verflüssigung erhitzt.

5. Verfahren nach Anspruch 1, dadurch gekennzeichnet, dass man das Einbringen der Lösung oder Suspension «a» in die Emulsion auf Albuminbasis «b», oder vice-versa, folgendermassen durchführt:

— man bildet eine erste Strömung a der Lösung und eine zweite Strömung b der Emulsion,

— man lässt diese Strömungen sich nebeneinander in gleicher Richtung fortbewegen und sich laminar vereinigen, um eine einzige Strömung a b aus zwei aneinanderstossenden, nebeneinandergelegenen Komponenten a und b zu erhalten,

— man trennt diese Strömung in axialer Richtung, ungefähr quer zur Verbindungszone der beiden Komponenten in zwei neue unabhängige Strömungen (a b)$_1$ und (a b)$_2$, wobei jede einen Teil der Komponente a und einen Teil der Komponente b beinhaltet,

— dann verändert man durch die Schräge von schraubenförmigen Schikanen, die in den Weg der Strömungen eingebracht werden, deren Form und Richtung zueinander, und, wie vorher, vereinigt man sie wieder laminar zu einer einzigen Strömung, wobei die durch die Schikanen verusrsachten Veränderungen im wesentlichen dazu dienen, um die Komponente a von (a b)$_1$ mit der Komponente b von (a b)$_2$ in

Kontakt zu bringen und umgekehrt, so dass eine ungefähr vierphasige Strömung a b a b = (a b)$_2$ erhalten wird,

— man wiederholt diese Arbeitsgänge des Abtrennens, der Neuorientierung und des Nebeneinanderliegens der Strömungen bis zum Erhalt einer makroskopisch homogenen, zusammengesetzten Strömung a b a b ... a b = (a b)$_n$, wobei n nicht kleiner als 12 ist.

6. Käseschaum aus 30-50 Gew.-% Käsefeststoffen, 1-4 Gew.% gewöhnlichem Salz und/oder anderen schmelzenden Salzen, 0,2-5 Gew.% Eialbumin, wobei der Rest aus Wasser und eventuellen Würzmitteln oder anderen zer-Nahrungsprodukten besteht, dadurch gekennzeichnet, dass die Dichte zwischen 0,65 bis 0,80 ist, dass er durch eine homogene Dispersion von Mikrobläschen aus Luft oder Gas in der Käsepaste besteht und dass sein Geschmack praktisch identisch jenem des für die Herstellung verwendeten Käses, jedoch angenehmer und feiner ist.

## Claims

1. Method for fabricating cheese foam starting with pasteurized or sterilized cheese, the latter having an aerated cohesive structure of long storage stability, constituted by the presence in the cheese dough of air or gas micro-bubbles dispersed homogeneously, characterized in that:

a) an aqueous solution $\underline{a}$ of cheese dough is prepared between 40 and 80°C, the viscosity of which in this temperature range, is of 05 to 50 Pa.s (500 to 50000 cP);

b) air or a non toxic gas is emulsified at room temperature by beating into an aqueous 10 to 20% by weight albumin solution so as to achieve a gas liquid emulsion $\underline{b}$ of the order of 10/1 to 20/1 v/v;

c) to 1 volume of $\underline{a}$, 0.5 to 2 volumes of $\underline{b}$ is incorporated between 40 and 80°C, by contacting the respective components and by imparting thereto laminar non turbulent movements such that they unite progressively together into a homogeneous mixture, the structure of which stabilizes itself by coagulation of the albumin.

2. Method according to claim 1, characterized in that solution or suspension $\underline{a}$ is obtained by heating the cheese until it is liquefied, the water of the solution being that amount contained in the starting cheese.

3. Method according to claim 1, characterized in that, for achieving solution $\underline{a}$, the cheese in comminuted form is dispersed into 5 to 50% of its weight of water and that it is heated until complete dissolution occurs with homogeneous suspension formation.

4. Method according to claim 1, characterized in that, for achieving suspension or solution $\underline{a}$, a milk curd is used of which the serum has been at least in part separated and which was first inoculated with at least one strain of microorganisms and rennet appropriate to convert this curd into cheese;

this mass is ripened under shelter from the air and under periodical agitation then, when the cheese ripening is complete, it is heated with or without the addition of more water, until it is fully melted.

5. Method according to claim 1, characterized in that the incorporation of the solution or suspension of cheese $\underline{a}$ into the albumin based emulsion $\underline{b}$, or the reversed operation, is effected as follows:

a first stream of said solution $\underline{a}$ is formed and a second stream of said emulsion $\underline{b}$ is formed;

these streams are displaced side by side in the same direction and linearly put together so as to achieve a single flow ab with two adjoining components $\underline{a}$ and $\underline{b}$ juxtaposed;

this flow is axially divided, approximatively transversally to the junction area of the components, into two new independent streams (ab)$_1$ and (ab)$_2$, each of which comports a portion of component $\underline{a}$ and a portion of component $\underline{b}$;

then, by means of helical baffles interposed on the path of the streams, the shape and the orientation relatively to each other of the streams are modified and, as before, they are again brought together laminarly into a single flow, the modification imposed by the baffles leading essentially to the contacting of the component $\underline{a}$ of (ab)$_1$ with component $\underline{b}$ of (ab)$_2$, and conversely, so to achieve an approximately tetraphase stream abab = (ab)$_2$;

these splitting, reorientation and juxtaposition operations of the streams are repeated until a composite stream, macroscopically homogeneous, abab...ab = (ab)n is obtained, n not being lower than 12.

6. Cheese foam comprising by weight 30 to 50% of cheese solids, 1 to 4% of ordinary salt and/or other melting salts, 0.2 to 5% of egg albumin, the remaining being constituted by water and possible seaoning agents or other comminuted foodstuff, characterized in that its density is of 0.65 to 0.80, that it is constituted by a homogeneous dispersion of air or gas microbubbles in the cheese dough and that its taste is practically identical with that of the cheese used for its manufacture but of a finer and softer quality.